# EUROPEAN PATENT SPECIFICATION

(11) **EP 3 630 466 B1**
(45) Date of publication and mention of the grant of the patent: **30.11.2022**
(21) Application number: 18727370.1
(22) Date of filing: 15.05.2018
(51) Int. Cl.: B29C 70/42, B29C 33/02, B29C 33/30, B29C 35/00, B29C 35/02

(54) **A MOULD TOOL COMPRISING TOOL HEATING ELEMENTS EACH COMPRISING AN ELECTRIC HEATING ELEMENT AND A FLUID CONDUIT**
FORMWERKZEUG MIT WERKZEUGHEIZELEMENTEN JEWEILS MIT EINEM ELEKTRISCHEN HEIZELEMENT UND EINER FLUIDLEITUNG
OUTIL DE MOULE COMPRENANT DES ÉLÉMENTS CHAUFFANTS D'OUTIL COMPRENANT CHACUN UN ÉLÉMENT CHAUFFANT ÉLECTRIQUE ET UN CONDUIT DE FLUIDE

(30) Priority: 22.05.2017 GB 201708194
(43) Date of publication of application: 08.04.2020
(73) Proprietor: McLaren Automotive Limited, Woking, Surrey GU21 4YH (GB)
(72) Inventor: SANTONI, Claudio, Woking Surrey GU21 4YH (GB)
(74) Representative: Slingsby Partners LLP
(86) International application number: PCT/GB2018/051316
(87) International publication number: WO 2018/215736

(56) References cited:
- EP-A2- 0 099 735
- WO-A1-2011/048365

## Description

This invention relates to a mould tool used in the manufacture of fibre-reinforced parts.

It is known to manufacture components from fibre-reinforced composite (FRC) materials. Such materials typically comprise a matrix that contains reinforcing fibres. As an example, the matrix could be an epoxy resin and the fibres could be carbon fibre (CF) strands. Materials of this type can have good strength in comparison to their weight. However, the processes required to make components from fibre-reinforced materials can be complex.

One process for forming FRC components is resin transfer moulding (RTM). In this process the reinforcing fibres are laid up in a mould cavity, liquid resin is injected into the mould cavity and the resin undergoes a chemical reaction (curing) or a phase change (solidifying), typically by varying the temperature of the mould body. Once the resin has become solid the mould can be opened and the resulting component removed. The resin can be injected under pressure. A vacuum can be drawn in the mould cavity to pull the resin into the mould. A press system can be used to apply pressure to the mould pieces in order to compact the reinforcing fibres and injected resin in such a way that the internal mould cavity defines the exterior surface of the moulded component. The mould cavity can be defined by rigid mould tools, which has the advantage of giving good control over the dimensional accuracy and surface finish of the component. Furthermore, long fibre runs, and woven mats of fibres can be embedded in the matrix, giving the end component great strength. RTM can be used for major structural components, such as vehicle tubs, as described in EP 2 772 416.

Another process for forming FRC components is compression moulding. In this process the reinforcing fibres can be impregnated with resin and then laid up in a mould cavity. The resin material can be of a thermoplastic nature or a thermosetting nature. Where the resin is of a thermoplastic nature, the reinforcing fibre could be laid into the mould tool with the reinforcing resin in a solid state. Varying the temperature of the mould tool will then cause the thermoplastic resin to melt and solidify to bind all reinforcing fibres together to form the moulded component.

Mould tools used for forming complex components generally comprise a number of parts which are assembled to define the exterior surface of the moulded part. For example, the mould tool may comprise six separate parts which define four sides, the top and the bottom of the moulded part. In order to cure the resin, the parts comprising the tool can be heated once assembled. One way of achieving this is by feeding hot water or oil from an external heater through conduits which run between and within the tool parts. However, in a mould comprising multiple tool parts, it can be difficult to run a conduit through all parts of the tool and subsequently connect the parts together. Furthermore, the parts must be cooled and the water or oil in the conduits drained before the mould can be opened and the moulded part removed. This can add significant delay to the moulding cycle time and health and safety hazards may arise, such as risks of leakage and contamination.

Furthermore, loading and unloading of materials into or from the multi-piece mould tool often takes place outside of the press system. This is achieved by way of a tool handling system capable of moving the tool assembly from a loading position outside of the press to the inside of the press and vice versa. This tool assembly movement requires umbilical systems to maintain the connection of all fluid feeds throughout the subsequent steps, or the fluid feeds will require disconnecting and re-connecting at every stage. Umbilical systems for fluid feeds are impractical due to their size and complexity, and are at risk of being mechanically trapped when tool assembly and press movement occur.

An alternative heating method is to use electrical channels or cartridges within the tool parts which use resistance heating to supply thermal energy to the moulded part. However, this can lead to non-uniform heating of the tool parts or the moulded part due to the point introduction of thermal power into the tool structure in the case of electrical cartridges. Similarly, electrical channels are not wide enough to uniformly heat all parts of the mould tool. Additionally, electrical systems are not able to force-cool the tool.

WO 2011/048365 A1 discloses a tool system for moulding an article comprising a tool surface made up of a number of tool pins. The temperature of individual tool pins can be independently controlled.

It is desirable to arrange the tool parts in such a way that their temperature can be changed or controlled and yet the mould can be assembled and disassembled more quickly to reduce the moulding cycle time.

The invention is defined by claims 1 and 11.

According to one aspect of the invention there is provided a mould tool comprising a plurality of tool parts which can be assembled to define an exterior surface of a moulded part, at least one of the tool parts comprising: a tool part body for defining part of the exterior surface of the moulded part; a conduit contained within the tool part being configured to transfer thermal energy between fluid contained in the conduit and the tool part body; a heating element configured to heat fluid contained within the conduit; and an electrical input configured to supply electricity to the heating element to heat the fluid so as to heat the tool part body.

The mould tool may be configured so that upon assembly of the plurality of tool parts to define the exterior surface of the moulded part, the electrical input of the at least one tool part is connected to an electrical output of one or more neighbouring tool parts.

The at least one tool part may further comprise a pump configured to circulate the fluid within the conduit.

The at least one tool part may further comprise an accumulator configured for maintaining the pressure within the conduit and accommodating thermal expansion of fluid contained in the conduit.

The at least one tool part may further comprise a cooling element configured for cooling the tool part body.

The cooling element may be configured to cool fluid contained within the conduit.

The at least one tool part may further comprise a second conduit being configured to transfer thermal energy between fluid contained in the second conduit and the tool part body, and the cooling element may be configured to cool fluid contained within the second conduit.

The mould tool may be configured so that the tool parts can be assembled to form an electrical connection between at least two of the tool parts.

The mould tool may be configured so that when the parts are assembled, a first tool part supplies electrical power to another of the tool parts.

The mould tool may further comprise a UV curing lamp directed to expose the moulded part to UV radiation.

According to a second aspect of the present invention there is provided a method for heating a mould tool, the tool comprising a plurality of tool parts which can be assembled so that the interior surfaces of the tool parts define an exterior surface of a moulded part and can be injected with a matrix precursor, at least one of the tool parts comprising a tool part body for defining part of the exterior surface of the moulded part and a conduit contained within the tool part being configured to transfer thermal energy between fluid contained in the conduit and a tool part body, the method comprising: assembling the plurality of tool parts around reinforcing fibres that define a shape of a moulded part; injecting the matrix precursor into the interior of the tool parts; supplying electricity to at least one of the tool parts to heat fluid contained within the conduit to heat the tool part body to a temperature above the curing temperature of the matrix precursor to cure the matrix precursor.

The method may further comprise, prior to assembling the plurality of tool parts, filling the conduit of the at least one tool part with fluid.

The method may further comprise circulating the heated fluid within the conduit to transfer thermal energy to the tool part body.

The method may further comprise dissembling the plurality of tool parts and removing the moulded part, wherein the fluid is contained within the conduit during the disassembling of the tool parts.

The assembling of the tool parts may comprise forming an electrical connection between at least two of the tool parts.

The present invention will now be described by way of example with reference to the accompanying drawings.

In the drawings:
Figure 1 shows an example of a vehicle tub manufactured by resin transfer moulding.
Figure 2A shows the tool parts comprising a mould tool when separated.
Figure 2B shows the tool parts when assembled to define a mould cavity.
Figure 3A show a schematic diagram of the heating system of a mould tool part.
Figure 3B shows a side view of a mould tool part.
Figure 4 shows a mould tool part connected to an adjacent mould tool part.

The following description is presented to enable any person skilled in the art to make and use the invention, and is provided in the context of a particular application.

Various modifications to the disclosed embodiments will be readily apparent to those skilled in the art.

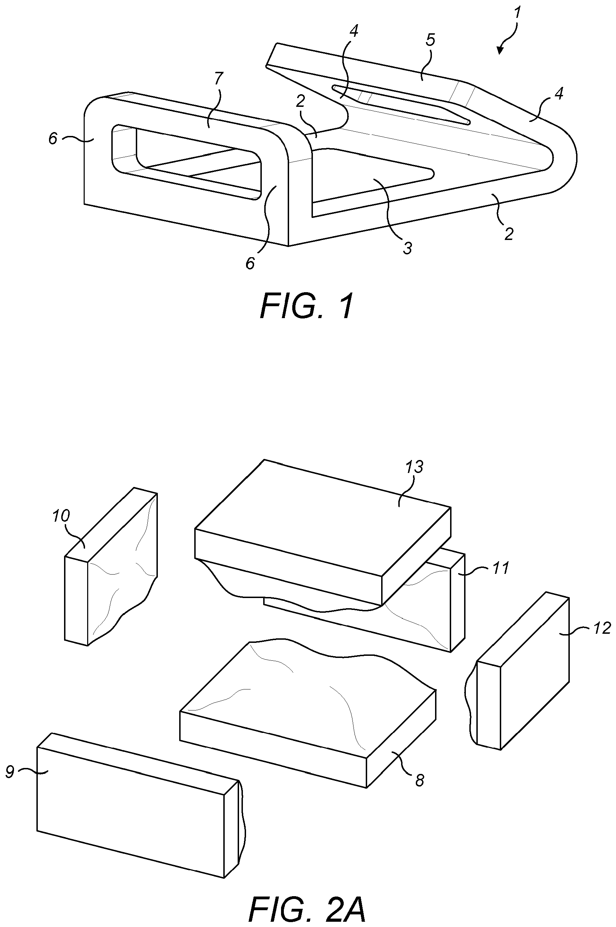

The present invention relates to a system for changing or controlling the temperature of a tool part of a mould in a moulding cycle. In one example, a moulded part is manufactured by resin transfer moulding. However other methods of moulding, such as compression moulding, may also be used. The mould tool may be for resin transfer moulding. The mould tool may be for other types of moulding such as metal casting. Figure 1 shows an example of a carbon fibre reinforced part formed by resin transfer moulding. A vehicle tub 1 has a frame comprising side sills 2 which run along the sides of the tub. A floor 3 extends between the sills. At the front of the tub frame A-pillars 4 rise from the sills. The upper ends of the A-pillars are joined by a cross-member 5. At the rear of the tub frame C-pillars 6 rise from the sills. The C-pillars are joined by a cross-member 7. The sills, pillars and cross-members are formed as hollow tubes. This can be achieved by inflating a bladder, or other support element, within each tube during the RTM process. Inflation could occur by means of a gas or liquid being injected into the support element. Alternatively, the support element may be rigidized by filling it with a medium, such as a granulated material, and applying a vacuum so that the skin of the support element conforms to the medium. The RTM process involves laying up long fibre reinforcement in a mould, injecting a matrix precursor into the mould, curing the matrix precursor to form a rigid matrix around the reinforcing fibres and removing the resulting component from the mould. The RTM mould defines the exterior shape of the RTM component.

The walls forming the tub frame are formed of rigid, cured epoxy resin in which are embedded long runs of carbon fibre. The fibre could be in the form of tow, mats or individual fibres. The mean length of the fibres in the walls could be greater than 25mm or more preferably greater than 50cm. The fibres are laid up in a way that strengthens the tub frame against the stresses expected to be imposed on it in use. Typically, most parts of the walls will contain multiple layers of reinforcing fibre. In each tubular element of the tub frame the fibres may run generally longitudinally and/or generally circumferentially. Fibres running generally circumferentially are known as hoop fibres.

Alternative methods may be used to form the moulded parts. For example, it could be formed by laying up mats of reinforcing fibre that have been pre-impregnated with resin (prepreg) and then curing the resin.

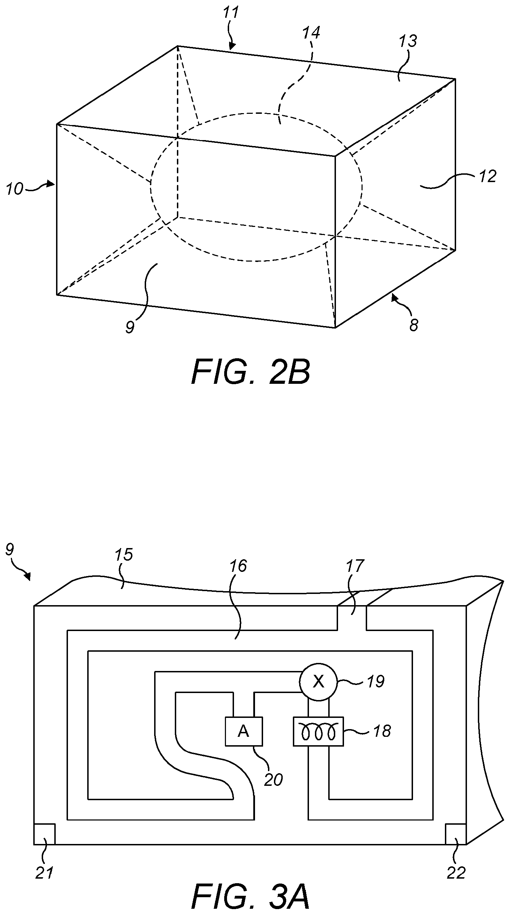

Figures 2A and 2B shows an example of a mould tool used to manufacture a moulded part, and in particular a vehicle tub. The mould tool comprises a plurality of parts. In this example, the mould tool comprises a base part 8, side wall parts 9, 10, 11, 12 and top part 13, as shown in Figure 2A. The side wall parts 9, 10, 11, 12 may define the laterally extending elements of the moulded part. The tool parts, when assembled, define at least part of the exterior of the moulded part 14, as shown in Figure 2B. When assembled, the tool parts may define at least part of the exterior surface of the moulded part 14. The tools parts may be assembled together when they fit together to form a mould cavity within.

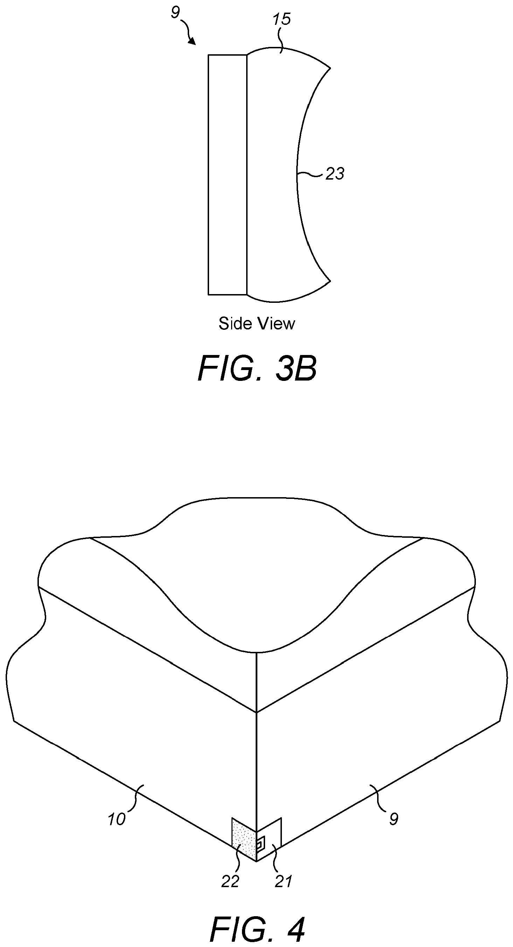

Figures 3A and 3B show a side wall part 9 of the mould tool, by way of example, in more detail. The description of the side wall part 9 can apply equally to any of the other tool parts. The tool part 9 comprises a tool part body 15 which defines part of the exterior of the moulded part when the tool parts are assembled. The tool part body 15 comprises a moulding surface 23. The moulding surface 23 of the tool part body 15 is in contact with or adjacent to the fibre layup and injected resin when the tool parts have been assembled together for moulding.

Contained within the side wall 9 is a conduit 16. The conduit 16 may contain fluid. The conduit may be a hollow pipe which may be filled with a fluid. The fluid may be a liquid. The fluid may be oil. The fluid may be water. The conduit may be filled with and drained of fluid via opening 17. The part also comprises a heating element 18, a pump 19 and an accumulator 20. The conduit 16 runs between the accumulator 20, pump 19 and heating element 18 to permit fluid flow between these elements. The accumulator 20 may be connected to a branch of the conduit 16 to permit thermal expansion and contraction of the fluid. A portion of accumulator 20 may comprise a compressible fluid such as a gas. The compressible fluid may be contained in a bladder comprised within the accumulator 20.

Electricity is supplied to the heating element, pump and accumulator via electrical input 21, which comprises at least two electrical connectors. The tool part may also comprise an electrical output 22, which comprises at least two electrical connectors.

The opening 17 may be sealed once the conduit is filled with fluid. The conduit may be filled with fluid prior to assembling the tool parts to form the mould. Alternatively, the conduit may be filled once the parts are assembled. If the opening 17 is sealed after filling with fluid, the fluid is then contained within the conduit of the tool part.

Once the mould parts are assembled to define the exterior surface of the moulded part, electricity is supplied to at least one of the tool parts via the electrical input 21. Electrical power may be supplied to electrical input 21 from a mains power supply, a generator, or other power source. The part may carry a battery for powering the active components of the part. The battery may be recharged when the connection to electrical input 21 is made.

The electricity supplied to the tool part causes heating element 18 to heat up. The heating element 18 heats the fluid contained within conduit 16. The heated fluid is circulated within the conduit by the pump 17. Thus, the fluid is heated by heating element 18 as the fluid passes through heating element 18. Accumulator 20 maintains the pressure in the conduit and accommodates thermal expansion, preventing the pressure in the conduit from getting too high when the fluid expands upon heating. Thus, at least one tool part comprises a self-contained heating circuit formed of the elements describes herein.

The tool part body 15 may be made from a material that is a good conductor of thermal energy. For example, the tool part body may be made from a metal. The metal may be steel. The metal may be aluminium.

The conduit 16 is configured to transfer thermal energy between the fluid contained within it and the tool part body 15. The conduit runs throughout the tool part and is positioned close to or in contact with a wall 23 of the tool part body. Thermal energy from the fluid is transferred to the walls of the conduit and to the wall 23 of the tool part body in contact with or close to the conduit. Thermal energy is then transferred from the tool part body to the moulded part. Therefore, the conduit serves to supply heat to the fibre layup and injected resin in the mould cavity to cure the resin in the moulded part.

The fluid in the conduit is preferably heated to a temperature at least equal to the curing temperature of the resin that is injected into the mould during the moulding cycle. Preferably at least one of the tool part bodies is heated to at least the curing temperature of the resin, which is typically 60°C. The tool part(s) may be held at this temperature until the moulded part is fully cured.

Once the resin has cured, the electricity supply to the mould tool part(s) may be stopped. The conduit(s) contained within the tool part(s) may be emptied of the heated fluid through opening 17, or preferably the fluid may remain in the conduit(s) ready for the next moulding cycle. The parts comprising the mould may then be separated and the moulded part removed.

A single tool part of the mould tool may comprise the features illustrated in Figure 3. Alternatively, more than one tool part may comprise these features.

Where more than one tool part comprises a conduit and heating system, the fluid contained within the conduit of each tool part is self-contained within each tool part and does not circulate between the other tool parts comprising the mould tool. The conduit of each tool part is contained only within that respective tool part. The conduit of a respective tool part does not connect with a conduit of another tool part. During a moulding cycle, fluid is not removed from the conduit of its respective part.

The electrical input connector 21 of one tool part may also connect with the electric output connector 22 of an adjacent tool part, such that when the parts are assembled to define the exterior surface of the moulded part, an electrical connection is made between the two tool parts. Figure 4 shows the electrical connection made between parts 9 and 10 when the electrical input of part 9 and the electrical output of part 10 are engaged.

Therefore, when the tool parts are assembled to define the exterior surface of the moulded part, an electrical connection may be made between two or more of the tool parts comprising the tool. An electrical connection may be made between all tool parts comprising the tool.

The connectors of adjacent parts' electrical inputs and outputs may be configured so that they plug together naturally when the mould is assembled. The electrical connectors on the tool parts to be connected to each other may be mutually configured so that on presentation of one tool part to another tool part on assembly of the mould, one connector is guided into a position where it is properly located so as to mate with the other connector. One or both of the connectors on the respective tool parts may comprise a resilient element which snaps into positive engagement with the other connector when the two are mated together, in such a way as to resist removal of one connector from the other. In addition, one or both of the engaged tool parts may comprise a mechanism that is manually operable to restrain one connector in engagement with the other.

If the adjacent tool part(s) also comprise(s) a conduit and a heating element, the electrical connection made between the parts may be used to supply electricity to the heating element of the adjacent tool part(s) to heat each of the tool parts as described above. The electrical connection is between the tool parts is made when the tool parts are assembled to define the mould cavity. Therefore, one tool part may supply an adjacent tool part with electricity.

The electrical input of the tool part(s) may also be configured to connect to an electrical output located at the press tool or another part of the moulding assembly, such as the mould tool handling assembly. Therefore, the tool part(s) may be supplied with electricity by the press or other part of the moulding assembly.

Using the above system, the conduits do not need to be drained of fluid before disassembling the tool parts to remove the moulded part, or refilled before assembling the parts ready for the next moulding cycle. The fluid may remain sealed within the conduits of their respective tool parts as the parts are assembled and disassembled. Thus, moulding cycle time is reduced. In this way, each part may comprise a self-contained heating system which heats the respective tool panel bodies of the tool panels.

Unlike umbilical systems, which are impractical due to their size, complexity and the risk of being mechanically trapped in the press and machinery, the electrical connections between tool parts as described above can be easily disconnected and re-connected automatically at every step of the cycle without the risk of leaks or contamination.

The carbon fibre material may be layed up in the mould prior to heating the tool parts. Alternatively, the tool parts may be pre-heated prior to assembling the mould or prior to laying up the fibre and injecting the resin once the mould is assembled.

In another embodiment, the tool parts may be kept at a constant temperature throughout all stages of the moulding process. The tool parts may be kept at a constant temperature during any of the moulding stages of: the cleaning of the tool parts, the loading of reinforcing fibres, the assembly of the tool parts to form the mould, moving the tool into and out of the press, resin injection, curing, disassembly of the tool parts and unloading of the moulded part. The tool parts may be kept at a constant temperature for all of these moulding stages. The tool parts may be kept at a constant temperature for the moulding stages of any subsequent moulding cycles. Controlling the temperature of the tool at a constant value can maximise the repeatability and consistency of the process. This type of isothermal control can be negatively affected by a tool heating system that requires time consuming connection or disconnection of the heating system throughout the cycle. The heating system described above, wherein the heating of each of the tool parts may be independent from that of the other parts, allows heating at a constant value to be maintained when the tool parts are disassembled to remove the moulded part and subsequently reassembled for the next moulding cycle.

As described above, the electrical input of the tool part(s) may be configured to connect to an electrical output located at the press tool or another part of the moulding assembly, such as the mould tool handling assembly. In this way, the mould tool can be kept continuously fed with electrical power throughout all stages of the moulding process and a constant temperature can be maintained.

The heating element contained within at least one of the tool parts may be a coil, ribbon (straight or corrugated), or strip of wire. The heating element may be made from a nickel-based or iron-based material. For example, the heating element may be made from Nichrome.

The alloy composing the heating element may be used bare, or embedded in a ceramic material to make it more robust and durable.

The heating element may comprise a thermostatic switch, such as a bimetallic strip, to turn off the heating element when the tool part has reached the required temperature.

The tool parts may also comprise a cooling circuit to assist the cooling of the conduit and tool part body after the resin curing process has been completed. The cooling circuit may comprise similar components to the heating circuit described above. For example, the cooling circuit may comprise a conduit, an accumulator, a pump and a heat exchanger. The heat exchanger being configured to remove thermal energy from the fluid comprised within the conduit. The heat exchanger may transfer that thermal energy to another medium, for instance to the air surrounding the tool part. The heat exchanger may be a chiller component. The part may be cooled before the tool is disassembled. The cooling circuit may comprise a secondary conduit which contains fluid that is to be cooled rather than heated. The cooling circuit may be disposed adjacent to, or concentrically around, the heating conduit in the tool part. The cooling conduit may contain a chilled fluid which is circulated by a pump to cool the tool part and thus also the heated fluid contained within the heating conduit.

Alternatively, the same conduit could carry two different fluids at different stages of the moulding cycle to heat and cool the mould. A first fluid could be heated and used to supply heat to the tool part. The first fluid may be drained from the conduit once the heating stage is completed. Alternatively, the first fluid may be pumped into a first storage vessel within the tool piece as a second fluid is pumped into the conduit from a second storage vessel. The conduit may comprise at least one valve to control the flow of fluid between the storage vessel(s) and the conduit. The second fluid may be stored at a lower temperature than the first fluid is at after heating. The second fluid could then be used to cool the tool part. The tool part may comprise a chiller component to cool the fluid contained in the conduit during the cooling stage. A valve in a supply line used to fill the conduit through the opening could be moved from a first position to a second position to alternate between the first and second fluids when filling the conduit at each stage.

The use of a cooling circuit in addition to the heating circuit can be advantageous because it can reduce the cycle time of curing a moulded part.

The system may also include a UV lamp in at least one tool part to assist the curing of the resin. The UV lamp may be powered by electricity. Electricity may be supplied via the same electrical input that supplies the heating element from a mains power supply, a generator, or other power source. Alternatively, the UV lamp may be powered by a battery. The UV lamp may be configured such that UV radiation radiates outwardly from the tool part body onto the moulded part. The UV lamp may be embedded within the tool part body. This may further reduce the moulding cycle time. Whilst the moulding of a first part in a first mould tool is taking place in the press, a second mould tool can be prepared by laying up fibres and assembling the mould at a loading position outside of the press. The heating system described above allows the first tool mould to be removed from the press and transported to an unloading position outside of the press for disassembly after the moulding of the first part has been completed. Concurrently, the second mould tool may be rapidly repositioned from the loading position to the press ready to mould a second part. This allows the moulding of parts in quick succession and thus can improve the efficiency of the production line.

## Claims

1. A mould tool comprising a plurality of tool parts (8, 9, 10, 11, 12, 13) which can be assembled to define an exterior surface of a moulded part (14), at least one of the tool parts (9) comprising:
a tool part body (15) for defining part of the exterior surface of the moulded part (14);
a conduit (16) contained within the tool part (9) being configured to transfer thermal energy between fluid contained in the conduit (16) and the tool part body (15);
a heating element (18) configured to heat fluid contained within the conduit (16); and
an electrical input (21) configured to supply electricity to the heating element (18) to heat the fluid so as to heat the tool part body (15).

2. The mould tool of claim 1, wherein the mould tool is configured so that upon assembly of the plurality of tool parts (8, 9, 10, 11, 12, 13) to define the exterior surface of the moulded part (14), the electrical input (21) of the at least one tool part (9) is connected to an electrical output (22) of one or more neighbouring tool parts (10).

3. The mould tool of any preceding claim, wherein the at least one tool part (9) further comprises a pump (19) configured to circulate the fluid within the conduit (16).

4. The mould tool of any preceding claim, wherein the at least one tool part (9) further comprises an accumulator (20) configured for maintaining the pressure within the conduit (16) and accommodating thermal expansion of fluid contained in the conduit (16).

5. The mould tool of any preceding claim, wherein the at least one tool part (9) further comprises a cooling element configured for cooling the tool part body.

6. The mould tool of claim 5, wherein the cooling element is configured to cool fluid contained within the conduit (16).

7. The mould tool of claim 6, wherein the at least one tool part (9) further comprises a second conduit being configured to transfer thermal energy between fluid contained in the second conduit and the tool part body (15), and the cooling element is configured to cool fluid contained within the second conduit.

8. The mould tool of any preceding claim, wherein the mould tool is configured so that the tool parts (8, 9, 10, 11, 12, 13) can be assembled to form an electrical connection between at least two of the tool parts (9, 10).

9. The mould tool of any preceding claim, wherein the mould tool is configured so that when the parts are assembled, a first tool part (10) supplies electrical power to another of the tool parts (9).

10. The mould tool of any preceding claim, further comprising a UV curing lamp directed to expose the moulded part (14) to UV radiation.

11. A method for heating a mould tool, the tool comprising a plurality of tool parts (8, 9, 10, 11, 12, 13) which can be assembled so that the interior surfaces of the tool parts define an exterior surface of a moulded part (14) and can be injected with a matrix precursor, at least one of the tool parts (9) comprising a tool part body (15) for defining part of the exterior surface of the moulded part (14) and a conduit (16) contained within the tool part (9) being configured to transfer thermal energy between fluid contained in the conduit (16) and a tool part body (15), the method comprising:
assembling the plurality of tool parts (8, 9, 10, 11, 12, 13) around reinforcing fibres that define a shape of a moulded part (14);
injecting the matrix precursor into the interior of the tool parts (8, 9, 10, 11, 12, 13);
supplying electricity to at least one of the tool parts (9) to heat fluid contained within the conduit (16) to heat the tool part body (15) to a temperature above the curing temperature of the matrix precursor to cure the matrix precursor.

12. The method of claim 11, further comprising, prior to assembling the plurality of tool parts (8, 9, 10, 11, 12, 13), filling the conduit (16) of the at least one tool part (9) with fluid.

13. The method of claim 11 or 12, further comprising circulating the heated fluid within the conduit (16) to transfer thermal energy to the tool part body (15).

14. The method of any of claims 11 to 13, further comprising dissembling the plurality of tool parts (8, 9, 10, 11, 12, 13) and removing the moulded part (14), wherein the fluid is contained within the conduit (16) during the disassembling of the tool parts (8, 9, 10, 11, 12, 13).

15. The method of any of claims 11 to 14, wherein the assembling of the tool parts (8, 9, 10, 11, 12, 13) comprises forming an electrical connection between at least two of the tool parts (9, 10).

## Patentansprüche

1. Formwerkzeug, umfassend eine Vielzahl von Werkzeugteilen (8, 9, 10, 11, 12, 13), die zusammengesetzt werden können, um eine Außenfläche eines Formteils (14) zu definieren, wobei mindestens eines der Werkzeugteile (9) Folgendes umfasst:
einen Werkzeugteilkörper (15) zum Definieren eines Teils der Außenfläche des Formteils (14);
eine Leitung (16), die in dem Werkzeugteil (9) enthalten und so konfiguriert ist, dass sie thermische Energie zwischen dem in der Leitung (16) enthaltenen Fluid und dem Werkzeugteilkörper (15) überträgt;
ein Heizelement (18), das so konfiguriert ist, dass es ein in der Leitung (16) enthaltenes Fluid erwärmt; und
einen elektrischen Eingang (21), der so konfiguriert ist, dass er das Heizelement (18) mit Strom versorgt, um das Fluid so zu erwärmen, dass der Werkzeugteilkörper (15) erwärmt wird.

2. Formwerkzeug nach Anspruch 1, wobei das Formwerkzeug so konfiguriert ist, dass nach dem Zusammensetzen der Vielzahl von Werkzeugteilen (8, 9, 10, 11, 12, 13), um die Außenfläche des Formteils (14) zu definieren, der elektrische Eingang (21) des mindestens einen Werkzeugteils (9) mit einem elektrischen Ausgang (22) eines oder mehrerer benachbarter Werkzeugteile (10) verbunden ist.

3. Formwerkzeug nach einem der vorhergehenden Ansprüche, wobei das mindestens eine Werkzeugteil (9) ferner eine Pumpe (19) umfasst, die so konfiguriert ist, dass sie das Fluid innerhalb der Leitung (16) zirkulieren lässt.

4. Formwerkzeug nach einem der vorhergehenden Ansprüche, wobei das mindestens eine Werkzeugteil (9) ferner einen Akkumulator (20) umfasst, der so konfiguriert ist, dass er den Druck innerhalb der Leitung (16) aufrechterhält und die Wärmeausdehnung des in der Leitung (16) enthaltenen Fluids aufnimmt.

5. Formwerkzeug nach einem der vorhergehenden Ansprüche, wobei das mindestens eine Werkzeugteil (9) ferner ein Kühlelement umfasst, das zum Kühlen des Werkzeugteilkörpers konfiguriert ist.

6. Formwerkzeug nach Anspruch 5, wobei das Kühlelement so konfiguriert ist, dass es in der Leitung (16) enthaltenes Fluid kühlt.

7. Formwerkzeug nach Anspruch 6, wobei das mindestens eine Werkzeugteil (9) ferner eine zweite Leitung umfasst, die so konfiguriert ist, dass sie thermische Energie zwischen einem in der zweiten Leitung enthaltenen Fluid und dem Werkzeugteilkörper (15) überträgt, und das Kühlelement so konfiguriert ist, dass es ein in der zweiten Leitung enthaltenes Fluid kühlt.

8. Formwerkzeug nach einem der vorhergehenden Ansprüche, wobei das Formwerkzeug so konfiguriert ist, dass die Werkzeugteile (8, 9, 10, 11, 12, 13) zusammengesetzt werden können, um eine elektrische Verbindung zwischen mindestens zwei der Werkzeugteile (9, 10) zu bilden.

9. Formwerkzeug nach einem der vorhergehenden Ansprüche, wobei das Formwerkzeug so konfiguriert ist, dass nach dem Zusammensetzen der Teile ein erstes Werkzeugteil (10) ein anderes der Werkzeugteile (9) mit elektrischer Energie versorgt.

10. Formwerkzeug nach einem der vorhergehenden Ansprüche, ferner umfassend eine UV-Härtungslampe, die darauf ausgerichtet ist, das Formteil (14) mit UV-Strahlung zu bestrahlen.

11. Verfahren zum Erwärmen eines Formwerkzeugs, wobei das Werkzeug eine Vielzahl von Werkzeugteilen (8, 9, 10, 11, 12, 13) umfasst, die so zusammengesetzt werden können, dass die Innenflächen der Werkzeugteile eine Außenfläche eines Formteils (14) definieren und mit einem Matrixvorläufer eingespritzt werden können, wobei mindestens eines der Werkzeugteile (9) einen Werkzeugteilkörper (15) zum Definieren eines Teils der Außenfläche des Formteils (14) umfasst und eine in dem Werkzeugteil (9) enthaltene Leitung (16) so konfiguriert ist, dass sie thermische Energie zwischen dem in der Leitung (16) enthaltenen Fluid und einem Werkzeugteilkörper (15) überträgt, wobei das Verfahren Folgendes umfasst:
Zusammensetzen der Vielzahl von Werkzeugteilen (8, 9, 10, 11, 12, 13) um Verstärkungsfasern herum, die eine Form eines Formteils (14) definieren;
Einspritzen des Matrixvorläufers in das Innere der Werkzeugteile (8, 9, 10, 11, 12, 13);
Zuführen von Strom zu mindestens einem der Werkzeugteile (9), um in der Leitung (16) enthaltenes Fluid zu erwärmen, um den Werkzeugteilkörper (15) auf eine Temperatur oberhalb der Aushärtungstemperatur des Matrixvorläufers zu erwärmen, um den Matrixvorläufer auszuhärten.

12. Verfahren nach Anspruch 11, ferner umfassend, vor dem Zusammensetzen der Vielzahl von Werkzeugteilen (8, 9, 10, 11, 12, 13), Füllen der Leitung (16) des mindestens einen Werkzeugteils (9) mit Fluid.

13. Verfahren nach Anspruch 11 oder 12, ferner umfassend das Zirkulieren des erwärmten Fluids innerhalb der Leitung (16), um thermische Energie auf den Werkzeugteilkörper (15) zu übertragen.

14. Verfahren nach einem der Ansprüche 11 bis 13, ferner umfassend das Zerlegen der Vielzahl von Werkzeugteilen (8, 9, 10, 11, 12, 13) und Entfernen des Formteils (14), wobei das Fluid während des Zerlegens der Werkzeugteile (8, 9, 10, 11, 12, 13) in der Leitung (16) enthalten ist.

15. Verfahren nach einem der Ansprüche 11 bis 14, wobei das Zusammensetzen der Werkzeugteile (8, 9, 10, 11, 12, 13) das Bilden einer elektrischen Verbindung zwischen mindestens zwei der Werkzeugteile (9, 10) umfasst.

## Revendications

1. Outil de moule comprenant une pluralité de pièces d'outil (8, 9, 10, 11, 12, 13) qui peuvent être assemblées pour définir une surface extérieure d'une pièce moulée (14), au moins une des pièces d'outil (9) comprenant :
un corps de pièce d'outil (15) pour définir une partie de la surface extérieure de la pièce moulée (14) ;
un conduit (16) contenu à l'intérieur de la pièce d'outil (9) qui est configuré pour transférer de l'énergie thermique entre un fluide contenu dans le conduit (16) et le corps de pièce d'outil (15) ;
un élément chauffant (18) configuré pour chauffer un fluide contenu à l'intérieur du conduit (16) ; et
une entrée électrique (21) configurée pour fournir de l'électricité à l'élément chauffant (18) pour chauffer le fluide de manière à chauffer le corps de pièce d'outil (15).

2. Outil de moule selon la revendication 1, dans lequel l'outil de moule est configuré de telle sorte que lors de l'assemblage de la pluralité de pièces d'outil (8, 9, 10, 11, 12, 13) pour définir la surface extérieure de la pièce moulée (14), l'entrée électrique (21) de l'au moins une pièce d'outil (9) est connectée à une sortie électrique (22) d'une ou plusieurs pièces d'outil voisines (10).

3. Outil de moule selon l'une quelconque des revendications précédentes, dans lequel l'au moins une pièce d'outil (9) comprend en outre une pompe (19) configurée pour faire circuler le fluide à l'intérieur du conduit (16).

4. Outil de moule selon l'une quelconque des revendications précédentes, dans lequel l'au moins une pièce d'outil (9) comprend en outre un accumulateur (20) configuré pour maintenir la pression à l'intérieur du conduit (16) et s'adapter à une dilatation thermique du fluide contenu dans le conduit (16).

5. Outil de moule selon l'une quelconque des revendications précédentes, dans lequel l'au moins une pièce d'outil (9) comprend en outre un élément de refroidissement configuré pour refroidir le corps de pièce d'outil.

6. Outil de moule selon la revendication 5, dans lequel l'élément de refroidissement est configuré pour refroidir un fluide contenu à l'intérieur du conduit (16).

7. Outil de moule selon la revendication 6, dans lequel l'au moins une pièce d'outil (9) comprend en outre un deuxième conduit configuré pour transférer de l'énergie thermique entre le fluide contenu dans le deuxième conduit et le corps de pièce d'outil (15), et l'élément de refroidissement est configuré pour refroidir un fluide contenu à l'intérieur du deuxième conduit.

8. Outil de moule selon l'une quelconque des revendications précédentes, dans lequel l'outil de moule est configuré de telle sorte que les pièces d'outil (8, 9, 10, 11, 12, 13) peuvent être assemblées pour former une connexion électrique entre au moins deux des pièces d'outil (9, 10).

9. Outil de moule selon l'une quelconque des revendications précédentes, dans lequel l'outil de moule est configuré de sorte que lorsque les pièces sont assemblées, une première pièce d'outil (10) fournit de l'énergie électrique à une autre des pièces d'outil (9) .

10. Outil de moule selon l'une quelconque des revendications précédentes, comprenant en outre une lampe de séchage UV dirigée de façon à exposer la pièce moulée (14) à un rayonnement UV.

11. Procédé de chauffage d'un outil de moule, l'outil comprenant une pluralité de pièces d'outil (8, 9, 10, 11, 12, 13) qui peuvent être assemblées de telle sorte que les surfaces intérieures des pièces d'outil définissent une surface extérieure d'une pièce moulée (14) et peuvent être injectées avec un précurseur de matrice, au moins une des pièces d'outil (9) comprenant un corps de pièce d'outil (15) pour définir une partie de la surface extérieure de la pièce moulée (14) et un conduit (16) contenu au sein de la pièce d'outil (9) étant configuré pour transférer de l'énergie thermique entre le fluide contenu dans le conduit (16) et un corps de pièce d'outil (15), le procédé comprenant :
l'assemblage de la pluralité de pièces d'outil (8, 9, 10, 11, 12, 13) autour de fibres de renforcement qui définissent une forme d'une pièce moulée (14) ;
l'injection du précurseur de matrice à l'intérieur des pièces d'outil (8, 9, 10, 11, 12, 13) ;
la fourniture d'électricité à au moins une des pièces d'outil (9) pour chauffer un fluide contenu à l'intérieur du conduit (16) pour chauffer le corps de pièce d'outil (15) jusqu'à une température supérieure à la température de séchage du précurseur de matrice pour sécher le précurseur de matrice.

12. Procédé selon la revendication 11, comprenant en outre, avant l'assemblage de la pluralité de pièces d'outil (8, 9, 10, 11, 12, 13), le remplissage du conduit (16) de l'au moins une pièce d'outil (9) avec un fluide.

13. Procédé selon la revendication 11 ou 12, comprenant en outre la mise en circulation du fluide chauffé à l'intérieur du conduit (16) pour transférer de l'énergie thermique au corps de pièce d'outil (15).

14. Procédé selon l'une quelconque des revendications 11 à 13, comprenant en outre le désassemblage de la pluralité de pièces d'outil (8, 9, 10, 11, 12, 13) et le retrait de la pièce moulée (14), dans lequel le fluide est contenu à l'intérieur du conduit (16) pendant le désassemblage des pièces d'outil (8, 9, 10, 11, 12, 13).

15. Procédé selon l'une quelconque des revendications 11 à 14, dans lequel l'assemblage des pièces d'outil (8, 9, 10, 11, 12, 13) comprend la formation d'une connexion électrique entre au moins deux des pièces d'outil (9, 10).
